# EUROPÄISCHE PATENTSCHRIFT

(11) **EP 4 495 439 B1**
(45) Veröffentlichungstag und Bekanntmachung des Hinweises auf die Patenterteilung: **13.08.2025**
(21) Anmeldenummer: 24177271.4
(22) Anmeldetag: 22.05.2024
(51) Int. Cl.: F16B 13/02

(54) **BEFESTIGUNGSELEMENT**
FASTENING ELEMENT
ELÉMENT DE FIXATION

(30) Priorität: 19.07.2023 DE 202023104046 U
(43) Veröffentlichungstag der Anmeldung: 22.01.2025
(73) Patentinhaber: OBO Bettermann Produktion Deutschland GmbH & Co.KG, 58710 Menden (DE)
(72) Erfinder: HARMS, Heiko, 58708 Menden (DE); KORTE, Thomas, 58708 Menden (DE)
(74) Vertreter: Haverkamp Patentanwälte PartG mbB

(56) Entgegenhaltungen:
- EP-B1- 0 105 865

## Beschreibung

Gegenstand der Erfindung ist ein Befestigungselement mit einem Schaft und mit in seitlicher Richtung von diesem abragenden, an den Schaft unter Zwischenschaltung eines Scharniers angeformten und gegenüber diesem kippbaren Sperrzähnen zum kraftschlüssigen Verbinden des mit seinem Schaft in ein Bohrloch eingesetzten Befestigungselementes bei einer entgegen der Einsetzrichtung auf das Befestigungselement wirkenden Zugbelastung, welche Sperrzähne mit einer gewölbten Unterseite ausgestattet sind, wobei der Schaft in Umfangsrichtung zumindest drei der Längserstreckung des Schaftes folgende Zahnreihen tragen kann.

Derartige selbsthaltende Befestigungselemente werden zum werkzeuglosen Montieren von Nutzgegenständen, beispielsweise solchen, wie diese für die Elektroinstallation bei der Verlegung von Kabeln oder Rohren benötigt werden, eingesetzt. Einzig erforderlich ist für die Montage des Befestigungselementes ein zuvor in den Befestigungsgrund eingebrachtes Bohrloch. Eingesetzt wird das Befestigungselement in ein solches Bohrloch nach Art eine Nagels, jedoch schlichtweg durch manuelles Eindrücken desselben. Diese auch als Steckdübel bezeichneten Befestigungselemente verfügen über einen Schaft und daran angeformte und gegenüber dem Schaft verkippbare Sperrzähne. Die zur Spitze des Schaftes weisende Unterseite der Sperrzähne ist gewölbt ausgeführt. Vor dem Eindrücken des Schaftes mit seinen Sperrzähnen in ein Bohrloch, mithin im Auslieferungszustand, wird durch diese eine Mantelfläche definiert, die einen größeren Durchmesser aufweist als das Bohrloch, in dem das Befestigungselement zu verankern ist. Beim Einsetzen des Schaftes in ein vorbereitetes Bohrloch werden die Sperrzähne entgegen der Einsteckrichtung zum Schaft hin verkippt sodass deren gewölbte Unterseite in radialer Richtung nach außen weist. Ist der Schaft eines solchen Befestigungselementes in ein Bohrloch eingesetzt und wirkt auf diesen eine Auszugskraft (Zugkraft entgegen der Einsetzrichtung), ist durch die sich an der Bohrlochwandung mit ihrer gewölbten Unterseite abstützenden Sperrzähne eine wirksame Auszugssicherung bereitgestellt, da die Sperrzähne bestrebt sind an der Bohrlochwandung abzurollen, wodurch mit zunehmender Auszugskraft eine zunehmende Radialkraft in die Bohrlochwandung eingekoppelt wird.

An ein solches Befestigungselement können unterschiedliche Nutzelemente angeformt sein, beispielsweise Kabel- oder Rohrhalter. Der Schaft vorbekannter Befestigungselemente dieser Art ist leistenförmig ausgeführt. An den einander gegenüberliegenden Flachseiten ist jeweils eine aus mehreren Sperrzähnen gebildete Sperrzahnreihe angeformt. Die Kippbarkeit der Sperrzähne gegenüber dem Schaft wird durch ein zwischen den Sperrzähnen und dem Schaft befindliches Filmscharnier bereitgestellt. Aus ihrer in radialer Richtung abragenden Vormontagestellung sind diese Sperrzähne parallel zur Längsachse des Schaftes kippbar. Dieses bedeutet, dass der den größten Abstand von der Flachseite des Schaftes aufweisende Scheitelbereich in der Mittelquerebene des Schaftes verkippt wird, in der auch die Längsachse des Schaftes angeordnet ist. Ein solches Befestigungselement ist aus EP 0 105 865 B1 bekannt.

Gemäß einer anderen Auslegung eines solchen als Steckdübel bezeichneten Befestigungselementes sind an die Flachseiten des Schaftes Keilelemente und mit diesen zusammenwirkende Schrägflächen angeformt (EP 1 040 544 B1). Die Keilelemente sind über einen L-förmig ausgeführten Spritzsteg an den Schaft angeformt. Wird dieses Befestigungselement in ein Bohrloch eingesteckt, wirken die Keilelemente auf die dem jeweiligen Keilelement zugeordnete Schrägfläche. Auch hierdurch ist eine wirksame Auszugssicherung bereitgestellt, da durch die Schrägflächen die Keilelemente in Richtung zur Bohrlochwand gepresst werden, um den gewünschten Kraftschluss mit der Bohrlochwand zu erreichen.

Auch sind Kombinationen derartiger Steckdübel bekannt, die in ein Bohrloch nicht nur eingesteckt, sondern zur Verbesserung der Verankerung auch gedreht werden (AT 16469 U1). Das Verdrehen eines solchen Befestigungselements dient dem Zweck, dass sich die radial äußere Kante der Sperrzähne in die Bohrlochwandung eingräbt. Derartige Befestigungselemente eignen sich vor allem auch zum Einsetzen in Befestigungsbohrungen mit einem Innengewinde. Nachteilig ist bei diesen Befestigungselementen, dass infolge des notwendigen Drehens die Möglichkeiten ihres Einsatzes sehr viel geringer sind als bei den zuvor Beschriebenen, nur mit einer translatorischen Bewegung in einem Bohrloch festzusetzenden Befestigungselemente. Überdiese ist das vorgesehene Eindrehen nur möglich, wenn die Sperrzähne mit ihrer für das Eingraben in die Bohrlochwand vorgesehenen Kante auch nach einer Verkippung gegenüber dem Schaft die radial Erstreckung des Befestigungselementes definieren.

Auch wenn derartige Befestigungselemente seit einer Vielzahl von Jahren in mehr oder weniger unveränderter Form eingesetzt werden, wäre es im Zuge steigender Anforderungen an die Belastbarkeit eines solchen Befestigungselementes wünschenswert, wenn mit diesem höhere Auszugskräfte realisiert werden könnten, mithin die Verankerung im Bohrloch verbessert wäre. Vorteilhaft wäre hieran auch, dass zum Aufnehmen gleicher Auszugskräfte ein solches Befestigungselement kürzer ausgeschaltet werden und somit Bohrlöcher auch weniger tief ausgeführt werden müssten.

Gelöst wird diese Aufgabe zum einen durch ein eingangs genanntes, gattungsgemäßes Befestigungselement, bei dem die Kippbarkeit zumindest einiger der Sperrzähne gegenüber dem Schaft dergestalt eingerichtet ist, dass der den maximalen Radius des Schaftes des Befestigungselementes bestimmende Abschnitt dieser Sperrzähne im Auslieferungszustand des Befestigungselementes in einer von der Längsachse des Schaftes beabstandeten oder winklig zu dieser verlaufenden Ebene verstellbar ist.

Ferner wird diese Aufgabe durch ein eingangs genanntes, gattungsgemäßes Befestigungselement, bei dem der Schaft in Umfangsrichtung zumindest drei, der Längserstreckung des Schaftes folgende Sperrzahnreihen trägt, gelöst, bei dem der Schaft eine entsprechende Anzahl, mit gleichem Winkelabstand zueinander angeordnete Radialsegmente aufweist und jeweils eine Sperrzahnreihe durch zwei benachbart zueinander angeordnete Radialsegmente in Umfangsrichtung des Schaftes gesehen eingefasst ist.

Bei dem Befestigungselement gemäß dem ersten Lösungsvorschlag wird eine verbesserte Verankerung in dem Bohrloch dadurch erreicht, dass zumindest einige der Sperrzähne, vorzugsweise jedoch alle Sperrzähne in Bezug auf denjenigen Bereich bzw. Abschnitt ihrer Oberfläche, durch den die maximale radiale Erstreckung des Schaftes des Befestigungselementes bestimmt ist, winklig in einer Ebene zur Längsachse des Schaftes oder entlang einer von der Längsachse des Schaftes beabstandeten Ebene verstellbar sind. Bei Anliegen einer auf das Befestigungselement wirkenden Zugkraft wird damit auf diese Sperrzähne eine Kraft eingeleitet, durch die die Sperrzähne zwar in einer der vorgenannten Ebenen verstellt werden. Aufgrund der gewölbten Unterseite wandert entsprechend dem Kippbetrag der Sperrzähne der Kontaktbereich mit der Bohrlochwandung in Umfangsrichtung, und zwar in Richtung der Biegeachse der Sperrzähne. Liegen die Sperrzähne nach Einstecken in ein Bohrloch mit einem Abschnitt ihrer unterseitigen Wölbung an der Bohrlochwandung an, was durch die elastische Rückstellkraft der Anbindung der Sperrzähne an den Schaft, beispielsweise mittels eines Filmscharniers, der Fall ist, wird über die Sperrzähne eine entsprechende Klemmkraft zum Erzielen des gewünschten Kraftschlusses eingeleitet. Erreicht wird hierdurch ein höheren Auszugskräften standhaltender Kraftschluss mit der Bohrlochwandung, da mit zunehmender Verstellung der Sperrzähne ihre gewölbte Unterseite an einem anderen Abschnitt der Bohrlochwand anliegt. Dieses ist vor allem bei einem Befestigungsgrund von Bedeutung, Ausbrechungen oder eine durch den Einsteckvorgang eingebrachte Rille aufweist.

Diese Konzeption eines selbsthaltenden Befestigungselementes erlaubt, was in einem bevorzugten Ausführungsbeispiel vorgesehen ist, eine Auslegung in der Anordnung der winklig zur Längsachse des Schaftes verstellbaren Sperrzähne, dass ein Teil der Sperrzähne in einer ersten Ebene die in die eine Richtung gegenüber der Längsachse des Schaftes geneigt ist, und der andere Teil der Sperrzähne in einer zweiten Ebene, die in die entgegengesetzte Richtung gegenüber der Längsachse des Schaftes geneigt ist, verstellbar sind. Entsprechend sicherer ist das Befestigungselement mit seinem Schaft in einem Bohrloch bei Anlegen einer Zugkraft verankert. Typischerweise wird man die Hälfte der Sperrzähne auslegen, dass deren Kippachse in die eine Richtung weist und die andere Hälfte der Sperrzähne in die andere Richtung. Dann ist eine Kraftverteilung in beide Umfangsrichtungen gleichermaßen vorgesehen. Der Neigungswinkel der Ebenen, in denen die Sperrzähne verstellt werden, gegenüber der Längsachse ist typischerweise gleich oder zumindest in etwa gleich. Dasselbe wird erreicht, wenn die Sperrzähne in unterschiedlichen, parallel zur Längsachse des Schaftes befindlichen Ebenen verstellbar sind.

Gemäß dem zweiten Lösungsvorschlag sind an den Schaft des Befestigungselementes in Umfangsrichtung zumindest drei Sperrzahnreihen angeformt. Die Sperrzahnreihen setzten sich zusammen aus einer Folge einzelnen Sperrzähne zusammen. Jede Sperrzahnreihe ist in Richtung der Längserstreckung des Schaftes ausgerichtet. Die verbesserte Belastbarkeit eines solchermaßen konzipierten Befestigungselementes ist durch die größere Anzahl von an den Schaft angeformten Sperrzähnen begründet.

Ein solches selbsthaltendes Befestigungselement gemäß dem zweiten Lösungsvorschlag verfügt über eine der Anzahl der Sperrzahnreihen entsprechende Anzahl an typischerweise mit gleichem Winkelabstand zueinander angeordneten Radialsegmente. Bei diesen Radialsegmenten handelt es sich um winklig zueinander angeordnete Leisten bzw. Schenkel. Bei einer Auslegung des Schaftes beispielsweise mit drei Sperrzahnreihen, ist der Schaft durch drei im Zentrum aneinander angeformte Radialsegmente bereitgestellt. Die Sperrzähne der Sperrzahnreihen befinden sich dann zwischen zwei derartiger Radialsegmente, sind mithin jeweils von zwei Radialsegmenten eingefasst. Die radiale Erstreckung der Sperrzähne ist zum Zwecke des Erzielens des gewünschten Kraftschlusses innerhalb eines Bohrloches größer als die radiale Erstreckung der Radialsegmente. Die Sperrzähne einer Sperrzahnreihe können an ein und demselben Radialsegment oder auch an den zueinander weisenden Seiten zweier benachbarter Radialsegmente wechselweise bzw. abwechselnd an das eine und das andere Radialsegment angeformt sein.

Da bei diesem Befestigungselement zumindest drei Sperrzahnreihen an den Schaft angeformt sind, ist notwendigerweise auch die Querschnittsfläche des Schaftes größer, verglichen mit einer Ausgestaltung eines solchen Befestigungselementes gemäß dem Stand der Technik. Diese vergrößerte Querschnittsfläche hat zur Folge, dass ein an den Schaft angeformtes Nutzelement, beispielsweise ein scheibenförmiger Kopf, ein Kabelhalter oder dergleichen über eine größere Fläche an den Schaft angeschlossen ist, so dass von dem an den Schaft angeformten Nutzelement höhere Lasten bruchfrei aufgenommen werden können. Insofern ist bei einer solchen Ausgestaltung die Anbindung des Nutzelementes an den Schaft des Befestigungselementes verbessert. Besonders vorteilhaft ist eine Ausgestaltung der vorbeschriebenen Art, bei der der Schaft mehrere mit Winkelabstand zueinander angeordnete Radialsegmente aufweist. Ein an die Stirnfläche eines solchermaßen konzipierten Schaftes angeschlossenes Nutzelement ist somit an dieses in Umfangsrichtung gesehen über eine größere Fläche mit dem Schaft verbunden. Bei einer Auslegung des Schaftes mit beispielsweise drei Radialsegmenten ist bei gleicher Dicke derselben die Anbindungsfläche an das Nutzelement mehr als 40% größer verglichen mit einem leistenförmigen Schaft derselben Dicke mit demselben Nenndurchmesser eines herkömmlichen Befestigungselementes.

Die Biegeachse der Sperrzähne verläuft gemäß einem bevorzugtem Ausführungsbeispiel rechtwinklig zur Längsachse des Schaftes.

Eine besonders gute Verankerung in einem Bohrloch weist ein Befestigungselement auf, bei dem die beiden vorstehend beschriebenen Lösungsvorschläge miteinander kombiniert sind.

Unabhängig davon, ob das Befestigungselement gemäß dem ersten oder dem zweiten Lösungsvorschlag oder durch eine Kombination der beiden Lösungsvorschläge ausgelegt ist, kann dessen Verankerung in dem Bohrloch dadurch gesteigert werden, dass die entgegen der Einsteckrichtung weisende Oberseite der Sperrzähne durch zwei winklig zueinander angeordnete Flächenabschnitte unter Ausbildung eines Zahns an der äußeren Umfangsfläche gebildet ist. Ein solcher Zahn wird durch die winklig aneinander grenzenden Flächenabschnitte der Sperrzahnoberseite und die daran angrenzende gewölbte Unterseite gebildet.

Unabhängig von der Auslegung des Befestigungselementes, kann der Schaft ungeteilt oder auch geteilt ausgeführt sein. Im letzteren Fall ist der Schaft quer zu seiner Längserstreckung in mehrere Schaftteile unterteilt, typischerweise zwei. Ein solches Befestigungselement mit einem geteilten Schaft kann auch als Dübelschelle angesprochen werden. Die beiden Schaftteile sind durch ein Schlaufenelement miteinander verbunden. Dieses wird um das oder die an einem Befestigungsgrund zu befestigenden Langgüter gelegt, bevor die Schaftteile zueinander geführt und, mit ihren zueinander weisenden Rücken aneinander abgestützt, in ein vorbereitetes Bohrloch eingesteckt werden. Besonders zweckmäßig ist eine Ausgestaltung, bei der die Rücken der aneinander abgestützten Schaftteile über jeweils komplementäre Verriegelungsstrukturen verfügen. Diese sind miteinander in Eingriff gestellt, wenn die Rücken der Schaftteile aneinander abgestützt sind, mithin wenn diese, den Schaft des Befestigungselementes bildend, in ein Bohrloch eingesteckt werden. Die Verriegelungsstrukturen sind ausgelegt, damit die zumindest zwei Schaftteile, wenn mit ihren Verriegelungsstrukturen miteinander in Eingriff gestellt, formschlüssig in Richtung der Längsachse des Schaftes miteinander verriegelt sind. Nachdem das Befestigungselement mit seinem Schlaufenelement um das oder die zu montierenden Langgüter herumgelegt ist, können die zumindest zwei Schaftteile, in Richtung ihrer Längserstreckung, dann formschlüssig miteinander verriegelt, in das Bohrloch eingeschoben werden, und zwar ohne eine Gefahr, dass sich die Schaftteile in Richtung der Längsachse des Schaftes gegeneinander verstellen bzw. verschieben würden. Die Auszugskräfte, denen ein solches Befestigungselement standhält, entsprechen denjenigen von Steckdübeln dienenden Befestigungslementen, die einen ungeteilten Schaft aufweisen. Vor allem ist auch ein Einstecken des Befestigungselementes mit den mit ihren Verriegelungselementen miteinander in Eingriff gestellten Schaftteilen gegenüber herkömmlichen Dübelschellen vereinfacht, da die Eindrückkraft, an beliebiger Stelle aufgebracht werden kann, ohne befürchten zu müssen, dass sich die Schaftteile in Einsteckrichtung gegeneinander verstellen. Damit ist mit einem solchen Befestigungselement auch die für eine Montage benötigte Zeit kürzer, da weniger Aufmerksamkeit auf die Richtigkeit einer Montage verwendet werden muss.

Als Verriegelungsstrukturen der Schaftteile verfügt ein Schaftteil typischerweise über wenigstens eine positive Struktur und ein zweites Schaftteil über eine dazu komplementäre negative Verriegelungsstruktur, in die die positive Verriegelungsstruktur bei aneinander abgestützten Rücken eintaucht. Zur Verbesserung der Formschlussqualität wird man typischerweise mehrere, beispielsweise zwei komplementäre Verriegelungsstrukturen verwenden, die mit axialem Abstand in Bezug auf die Längsachse des Schaftes voneinander beabstandet sind.

In einer bevorzugten Weiterbildung eines solchen Befestigungselementes mit geteiltem Schaft ist vorgesehen, dass die komplementären Verriegelungsstrukturen der zumindest zwei Schaftteile in einer Querrichtung zur Längsachse wirkende, zueinander komplementäre Hinterschneidungen aufweisen. Die komplementären Verriegelungsstrukturen der beiden Schaftteile können dann nach Art einer Rastung formschlüssig miteinander in Eingriff gestellt werden. Auf diese Weise kann das Befestigungselement, nachdem dieses um das oder die zu montierende Langgüter herumgelegt ist, geschlossen werden. Aus den beiden Schaftteilen ist dann ein in sich zusammenhängender Schaft gebildet. Bei einer derartigen Ineingriffstellung sind die diesbezüglich miteinander verbundenen Schaftteile sodann zusätzlich auch auch in einer Querrichtung zur Längsachse des Schaftes formschlüssig miteinander verbunden. Bei einer solchen Auslegung ist die Rastung von zwei Schaftteilen typischerweise so ausgelegt, dass bei Anlegen einer entsprechenden Lösekraft das als Dübelschelle ausgelegte Befestigungselement durch Trennen der miteinander verbundenen Schaftteile auch wieder geöffnet werden kann.

Verfügt der Schaft des Befestigungselementes über beispielsweise drei Radialsegmente erfolgt die Teilung des Schaftes in einer Trennfläche, die durch zwei benachbart zueinander angeordnete Radialsegmente verläuft. Aufgrund der winkeligen Anordnung der Radialsegmente zueinander ist die Trennfläche in zwei Teilungsebenen, die mit dem Winkel, den zwei benachbarte Radialsegmente einfassen, zueinander angeordnet sind, unterteilt. Die winkelige Ausführung der Teilungseben hat bei einem solchen Befestigungselement zum Vorteil, dass die beiden Schaftteile, wenn mit ihren komplementären Verriegelungsstrukturen miteinander in Eingriff gestellt, auch in Umfangsrichtung gesehen formschlüssig gegeneinander abgestützt sind. Daher kann ein solches Befestigungselement auch höheren Auszugskräften standhalten, ohne dass zu befürchten wäre, dass die Schaftteile gegeneinander in Umfangsrichtung versetzt werden würden, was wiederum eine Beeinträchtigung der Verankerungsqualität zur Folge hätte.

Hergestellt wird ein erfindungsgemäßes Befestigungselement aus einem hierfür geeigneten Kunststoff.

Nachfolgend ist die Erfindung anhand von Ausführungsbeispielen beschrieben. Es zeigen:
- **Fig. 1:**: eine perspektivische Ansicht eines Befestigungselementes gemäß der Erfindung in einer ersten Anwendungsausgestaltung,
- **Fig. 2:**: einen Querschnitt durch das Befestigungselement der Figur 1 entlang der Linie A - B,
- **Fig. 3:**: das Befestigungselement der Figur 1, aus einer anderen Richtung perspektivisch betrachtet,
- **Fig. 4:**: eine Seitenansicht des Befestigungselementes der vorstehenden Figuren im Auslieferungszustand und somit unbenutzt,
- **Fig. 5:**: das Befestigungselement der Figur 4 mit seinen verstellten Sperrzähnen,
- **Fig. 6:**: eine Schnittdarstellung entsprechend derjenigen der Figur 2 mit dem in ein Bohrloch eingesetzten Befestigungselement mit Blickrichtung in das Bohrloch hinein,
- **Fig. 7:**: eine perspektivische Darstellung des Befestigungselementes der vorstehenden Figuren beim Einsetzen in ein Bohrloch eines im Übrigen nicht näher dargestellten Befestigungsgrundes,
- **Fig. 8a** - **8e:**: weitere beispielhafte Ausgestaltungen von Anwendungsbeispielen des Befestigungselementes der vorstehenden Figuren,
- **Fig. 9:**: eine perspektivische Darstellung eines erfindungsgemäßen Befestigungselementes im Auslieferungszustand gemäß einem weiteren Ausführungsbeispiel,
- **Fig. 10:**: eine weitere perspektivische Ansicht des Befestigungselementes der Figur 9 aus einer etwas anderen Perspektive,
- **Fig. 11:**: eine vergrößerte Darstellung eines Ausschnittes des Befestigungselementes der Figur 9,
- **Fig. 12:**: eine Draufsicht auf das einsteckseitige Ende des Befestigungselementes der Figuren 9 bis 11,
- **Fig. 13:**: das erfindungsgemäße Befestigungselement gemäß Figuren 9 bis 12 mit seinen beiden miteinander zur Ausbildung eines Schaftes in Eingriff gestellten Schaftteilen,
- **Fig. 14:**: eine schematisierte Darstellung zum Darstellen einer Montage eines Langgutes mittels des in den Figuren gezeigten erfindungsgemäßen Befestigungselementes gemäß Figuren 9 bis 13 an einem Befestigungsgrund und
- **Fig. 15:**: eine Schnittdarstellung durch den Befestigungsgrund der Figur 14 mit dem daran mittels des Befestigungselementes montierten Langgutes.

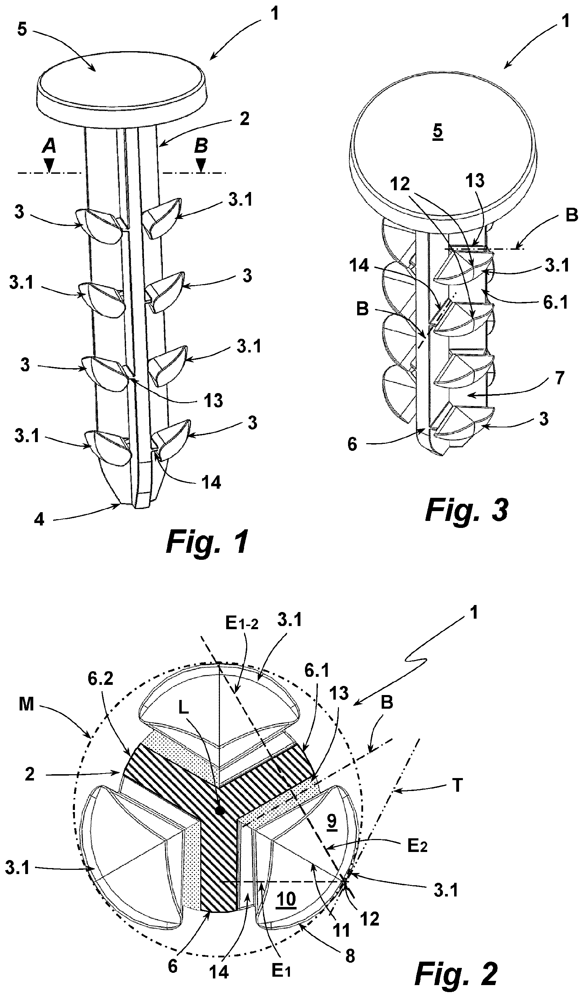

Ein manuell in einem Bohrloch eines Befestigungsgrundes zu verankerndes Befestigungselement 1 umfasst einen Schaft 2 und daran angeformte Sperrzähne 3, 3.1. Die Sperrzähne 3, 3.1 sind bezüglich ihrer Formgebung gleich, unterscheiden sich jedoch in Bezug auf denjenigen Abschnitt, mit dem diese an den Schaft 2 angeformt sind. Bei dem in Figur 1 dargestellten Ausführungsbeispiel ist an den Schaft 2 an seinem der Schaftspitze 4 gegenüberliegenden Ende ein Kopf 5 angeformt. Der Kopf 5 ist scheibenförmig ausgeführt. Bei dem Kopf 5 handelt es sich um einen scheibenförmigen Flachkopf mit einem kreisrunden Umfang. Der Kopf 5 ist bei diesem Ausführungsbeispiel die vorgesehene Anwendung für die Verwendung des Befestigungselementes 1. Anstelle des Kopfes 5 kann an den Schaft 2 auch jedwedes andere Formteil angeformt sein.

Der Schaft 2 ist, wie aus Figur 2 ersichtlich, aus drei Radialsegmenten 6, 6.1, 6.2 zusammengesetzt. Die Radialsegmente 6, 6.1, 6.2 sind leistenförmig ausgeführt und im Zentrum des Schaftes 2 aneinander angeformt. Die Radialsegmente 6, 6.1, 6.2 ragen in radialer Richtung von dem Zentrum des Schaftes 2 ab und sind mit gleichem Winkelabstand zueinander angeordnet. Im Schaftzentrum befindet sich seine Längsachse L. Damit ist durch zwei benachbarte Radialsegmente 6, 6.1 bzw. 6.1, 6.2 bzw. 6.2, 6 jeweils eine in radialer Richtung offene Kammer 7 geschaffen, in der die Sperrzähne 3, 3.1 jeweils einer Sperrzahnreihe angeordnet sind. Die Sperrzähne 3, 3.1 sind, wie aus der Draufsicht der Figur 2 erkennbar mit einer sich etwa über 120 Grad streckenden Grundfläche und einer gekrümmten radial äußeren, entgegen der Einsteckrichtung befindlichen Kante 8 ausgeführt. Die in Figur 2 erkennbare Oberseite der Sperrzähne, hier anhand der Sperrzähne 3.1 gezeigt (selbiges gilt auch für die Sperrzähne 3), ist aus zwei Flächenabschnitten 9, 10 zusammengesetzt. Die beiden Flächenabschnitte 9, 10 sind, wie in Figur 3 erkennbar, winklig zueinander ausgerichtet. Durch die winklig aneinander grenzenden Flächenabschnitte 9, 10 ist eine zum Kopf 5 weisende Kante 11 gebildet. Aufgrund der winkligen Anordnung der beiden Flächenabschnitte 9, 10 ist dort, wo die äußere Kante 8 und die Kante 11 ineinander übergehen ein Zahn 12 gebildet. Die Unterseite der Sperrzähne 3, 3.1 ist gewölbt, wie in Figur 1 erkennbar. Die Sperrzähne 3.1 sind mit ihrem Flächenabschnitt 9 an die zu diesem Flächenabschnitt weisende Seite eines Radialsegmentes 6.1 angeformt. Angeformt sind die Sperrzähne 3.1 mittels eines Filmscharniers 13, dessen Längsachse horizontal und somit parallel zur Ebene des Kopfes 5 bzw. rechtwinklig zur Längsachse L des Schaftes 2 verläuft. In Figur 2 sind die Filmscharniere 13, mit denen die Sperrzähne 3.1 an das jeweilige Radialsegment 6, 6.1 bzw. 6.2 angeformt sind, zum Kenntlichmachen gerastert dargestellt. Die Auslegung der Sperrzähne 3.1 ist aufgrund ihrer Anbindung derselben an den Schaft 2 asymmetrisch angelegt. Die durch die Filmscharniere 13 bereitgestellte Biegeachse B verläuft winklig zu derjenigen Tangente T, die an dem die größte radiale Erstreckung aufweisenden Abschnitt der Sperrzähne 3.1 anliegt. Wie in Figur 2 erkennbar, ist dieses derjenige Umfangsabschnitt der Sperrzähne 3.1, an der sich der Zahn 12 befindet. Die die größte radiale Erstreckung der Sperrzähne 3.1 einfassende Mantelfläche ist in Figur 2 mit dem Bezugszeichen M eingezeichnet.

Die Sperrzähne 3, 3.1 sind in jeder durch den Schaft 2 bzw. seine Radialsegmente 6, 6.1, 6.2 bereitgestellte Kammer 7 einer Sperrzahnreihe angeordnet. In den der Längserstreckung des Schaftes 2 folgenden Sperrzahnreihen sind die Sperrzähne 3, 3.1 wechselweise an die jeweils eine Kammer 7 einfassenden Radialsegmente 6, 6.1, 6.2 angeformt. Dieses bedeutet, dass ein erster Sperrzahn an dem einen Radialsegment und der darunter bzw. darüber befindliche Sperrzahn an dem anderen Radialsegment angeformt sind. Die einzelnen Sperrzähne 3, 3.1 der Sperrzahnreihen befinden sich auf einem Höhenniveau. Die Anlenkung bzw. Anformung der Sperrzähne 3, 3.1 in einem Höhenniveau erfolgt, wie aus Figur 2 ersichtlich, gleichsinnig. Die unterhalb der in Figur 2 gezeigten Sperrzähne 3.1 befindlichen Sperrzähne 3 sind mit ihren Flächenabschnitten 10 an das jeweils andere eine Kammer begrenzende Radialsegment 6, 6.1, 6.2 angeschlossen. Die diesbezüglichen Filmscharniere sind mit dem Bezugszeichen 14 kenntlich gemacht.

Durch den jeweiligen Zahn 12, ist wie aus Figur 2 ersichtlich, der Durchmesser der Mantelfläche M des Befestigungselementes 1 in seinem Auslieferungszustand definiert. Wird ein Sperrzahn 3.1 um die Biegeachse B seines Filmscharniers 13 gegenüber dem an das Filmscharnier 13 angeformten Radialsegmentes 6, 6.1, 6.2 verstellt, wird der Zahn 12 in einer Ebene verstellt, die parallel zur Längsachse L des Schaftes 2 verläuft. In Figur 2 ist die Spur dieser sich parallel zur Längsachse L erstreckenden Ebene bezüglich eines Sperrzahns 3.1 mit E₂ kenntlich gemacht. Die Sperrzähne 3 sind an das jeweilig andere, diese Sperrzahnreihe einfassende Radialsegment an ihrem Filmscharnier 14 angeformt. Bei diesen Sperrzähnen 3 wird der Zahn 12 in der Ebene E₁, die ebenfalls parallel zur Längsachse L des Schaftes 2, verläuft verstellt. Bei dem dargestellten Ausführungsbeispiel fluchten die Zähne 12 der Sperrzähne 3, 3.1 ein axialer Richtung im Auslieferungszustand des Befestigungselementes 1 miteinander. Die an gegenüberliegende Flachseiten eines Radialsegmentes 6, 6.1, 6.2 angeformten Sperrzähne 3, 3.1 werden aufgrund der parallelen Ausrichtung der Anformungsflächen in ein und derselben Ebene gegenüber dem Schaft verstellt. Insofern entspricht die Ebene E₂ eines Sperrzahns 3.1 der Ebene E₁-₂ eines Sperrzahns 3 aus der benachbarten Kammer des Schaftes 2.

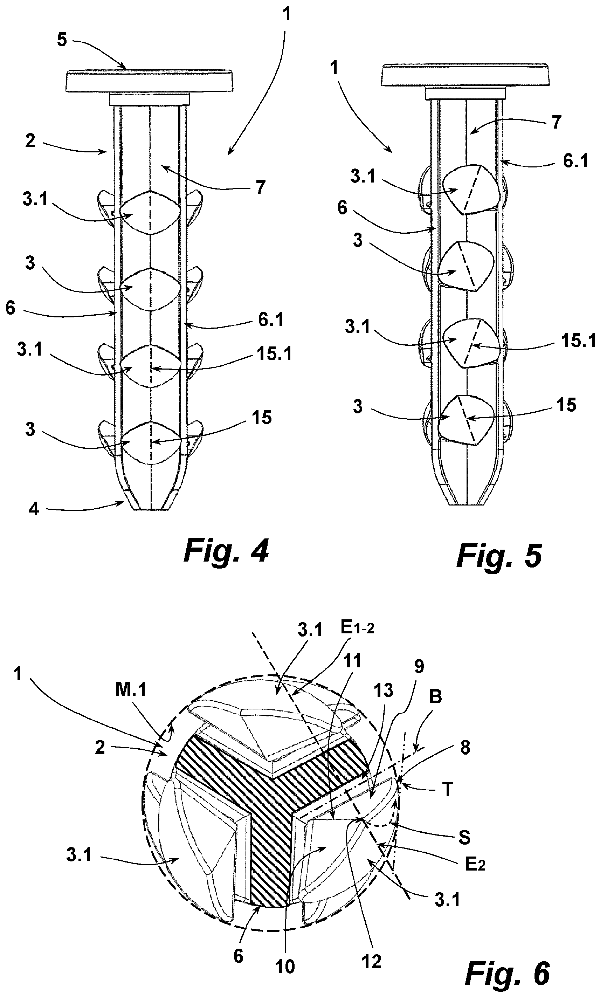

In den Figuren 1 bis 3 und ebenso in Figur 4 ist das Befestigungselement 1 vor seiner Benutzung und somit in seinem Auslieferungszustand gezeigt. Die Sperrzähne 3, 3.1 sind gegenüber der Längsachse L des Schaftes 2 unverstellt. Figur 4 zeigt in einer Seitenansicht die in der Kammer 7 des Schaftes 2 befindliche Sperrzahnreihe mit den Sperrzähnen 3, 3.1. Innerhalb der Kammer 7 sind diese Sperrzähne 3, 3.1 horizontal und damit parallel zum Kopf 5 ausgerichtet. Die radial verlaufende Kante 11 zwischen den Flächenabschnitten 9, 10 mit ihrem endseitigem Zahn 12 bildet den oberen Abschluss der Oberseite. In einige der Sperrzähne 3, 3.1 ist mit gestrichelter Linie der Scheitel 15, 15.1 der zahnunterseitigen Wölbung gezeigt. Der Verlauf der Scheitel 15, 15.1 der Sperrzähne 3, 3.1 verläuft in derselben Ebene. In dieser Ebene befindet sich auch die Längsachse L des Schaftes 2.

Der Durchmesser eines Bohrloches, in das das Befestigungselement 1 eingesetzt wird ist zwar größer als der Durchmesser einer die Radialsegmente 6, 6.1, 6.2 einfassenden Mantelfläche, jedoch geringer als der Durchmesser der die Sperrzähne 3, 3.1 umfänglich einfassenden Mantelfläche 11.

Figur 5 zeigt das Befestigungselement 1 mit seinen Sperrzähnen 3, 3.1 in einer Stellung gegenüber dem Schaft 2, wenn das Befestigungselement 1 in ein Bohrloch (nicht dargestellt) eingeführt ist. Die Sperrzähne 3, 3.1 sind aufgrund ihrer durch das jeweilige Filmscharnier 13, 14 gelenkigen Anbindung an den Schaft 2 entgegen der Einsteckrichtung mit ihrer Oberseite in Richtung zu dem jeweiligen Radialsegment 6, 6.1, 6.2, an das der jeweilige Sperrzahn 3, 3.1 angeformt ist, in die jeweilige Kammer 7 hinein verkippt. Infolge der asymmetrischen Anbindung der Sperrzähne 3, 3.1 und ihrer wechselweisen Anformung innerhalb einer Sperrzahnreihe an das jeweilig benachbarte Radialsegment 6, 6.1 erweckt dies den Eindruck, dass die Sperrzähne 3, 3.1 winklig zur Längsachse des Schaftes 2 verkippt worden sind. Verstellt worden sind die Sperrzähne 3, 3.1 in Bezug auf ihren jeweiligen Zahn 12 in der jeweiligen Ebene E₁ bzw. E₂. Dieses resultiert in einer Kippung der Scheitel 15, 15.1 der Sperrzähne 3, 3.1 in entgegengesetzte Richtungen, wie dieses aus Figur 5 erkennbar ist. Die Kipprichtung ist aufgrund der Ausrichtung des jeweiligen Filmscharniers 13 bzw. 14 in Richtung desjenigen Radialsegmentes 6, 6.1 gerichtet, an dass der jeweilige Sperrzahn 3 bzw. 3.1 angeformt ist. Die Sperrzähne 3 sind somit in Richtung zu dem Radialsegment 6 und die Sperrzähne 3.1 in Richtung zu dem Radialsegment 6.1 gekippt. Die Zähne 12 der Sperrzähne 3, 3.1 befinden sich somit im Unterschied zu ihrer Stellung bei unbenutztem Befestigungselement 1 nicht mehr in einer in Längserstreckung fluchtenden Anordnung zueinander, sondern sind wechselweise versetzt zueinander angeordnet.

Figur 6 zeigt das Befestigungselement 1 in einem Querschnitt entsprechend dem Querschnitt der Figur 2, jedoch mit seinen, wie vorstehend beschrieben verstellten Sperrzähnen 3, 3.1. Die die größte radiale Erstreckung der Sperrzähne 3.1 einfassenden Mantelfläche M.1 ist im Durchmesser deutlich geringer als die Mantelfläche M des in Figur 2 im Querschnitt gezeigten Befestigungselementes 1 mit unverstellten Sperrzähnen 3.1. Der Ort der größten radialen Erstreckung der Sperrzähne 3.1 und damit deren Kontaktfläche mit der Bohrlochwand wandert im Zuge des Kippvorganges von dem Bereich des Zahns 12 aufgrund der gewölbten Ausbildung der Sperrzahnunterseite in Richtung zu dem Filmscharnier 13 nahen Ende der äußeren Kante 8 des Flächensegmentes 9 hin. Die Spur des bei zunehmender Kippung des Sperrzahns 3.1 wandernden Kontaktbereiches mit der jeweiligen Mantelfläche bzw. einer Bohrlochwandung ist in Figur 6 schematisiert anhand eines Sperrzahnes 3.1 mit S eingetragen. Nach wie vor ist die Tangente T winklig zur Biegeachse B angeordnet. Im Zuge des Wanderns des Kontaktbereiches ist der von der Biegeachse B und der Tangente T eingeschlossene Winkel gegenüber der Anordnung der Figur 2 mit unverstellten Sperrzähnen 3, 3.1 größer geworden.

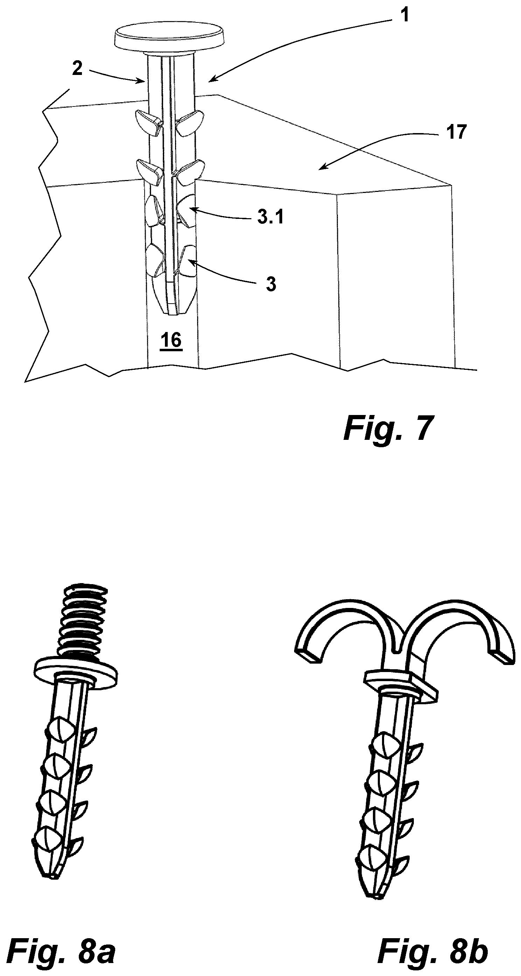

Der Vorgang des Einsetzens des Befestigungselementes 1 in ein Bohrloch 16 in einem im Übrigen nicht näher dargestellten Befestigungsgrund 17, beispielsweise einem Mauerwerk ist in Figur 7 gezeigt. Das Befestigungselement 1 ist etwa zur Hälfte in das Bohrloch 16 eingesteckt. Die in dem Bohrloch 16 befindlichen Sperrzähne 3, 3.1 haben eine Raumlage eingenommen, wie in Figur 5 gezeigt. Die noch nicht im Bohrloch 16 befindlichen Sperrzähne 3, 3.1 weisen eine Raumlage, wie in den Figuren 1 bis 4 gezeigt, auf.

Vorteilhaft an dem Befestigungselement 1 ist vor allem seine verbesserte Verankerung im Bohrloch 16, sodass dies höheren Auszugskräften standhält. Zudem ist das Befestigungselement 1 durch die bei dem dargestellten Ausführungsbeispiel an den Schaft 2 angeformten drei Sperrzahnreihen gegenüber herkömmlichen Befestigungselementen besser geführt. Dieses gilt auch für auf das Befestigungselement 1 wirkende Auszugskräfte, nachdem dieses in das Bohrloch 1 eingesetzt worden ist. Gewährleistet wird dieses durch die wechselweise in unterschiedliche Richtungen verstellbaren Sperrzähne 3, 3.1, die mit ihren gewölbten Unterseiten an der Bohrlochwandung anliegen.

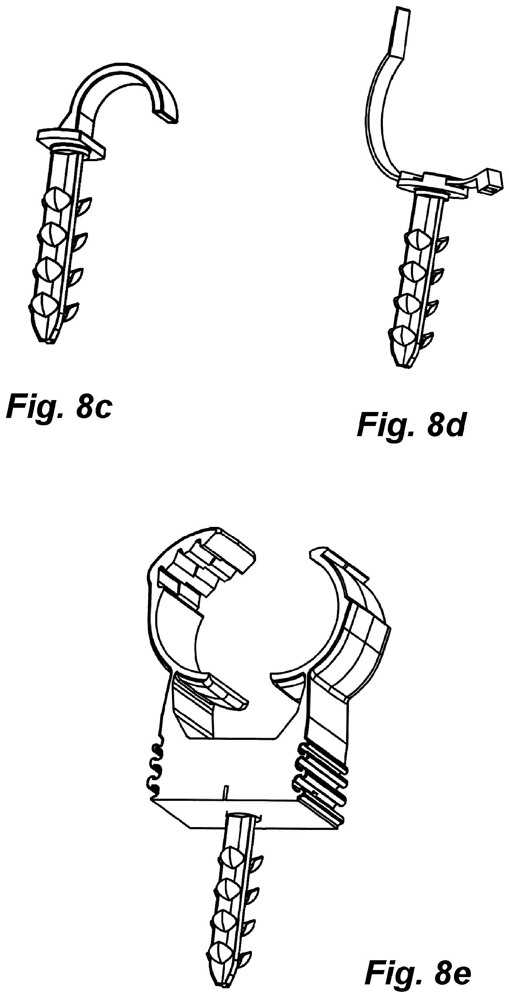

Das Befestigungselement 1 ist den vorangegangenen Figuren anhand eines ersten Anwendungsbeispiels mit dem Kopf 5 als Nutzelement beschrieben. Die Figuren 8a - 8e zeigen beispielhaft andere Anwendungsbeispiele des Befestigungselementes 1. Figur 8a zeigt ein mit einem Schraubgewinde ausgerüstetes Befestigungselement. Bei dem Anwendungsbeispiel der Figur 8b ist das Befestigungselement Teil eines zweireihigen Kabelhalters. Figur 8c zeigt das Befestigungselement mit einem einreihigen Kabelhalter. Bei dem Anwendungsbeispiel der Figur 8d ist an das Befestigungselement ein Kabelbinder angeschlossen. Das Anwendungsbeispiel der Figur 8e zeigt das Befestigungselement als Teil eines Rohrhalters. Zahlreiche weitere Anwendungsbeispiele zum Einsatz eines oder mehrere der erfindungsgemäßen Befestigungselemente sind möglich. Beispielsweise können ein oder auch mehrere dieser Befestigungselemente an den Boden einer Installationsdose oder anderer zu montierender Gehäuse oder Geräte angeformt sein.

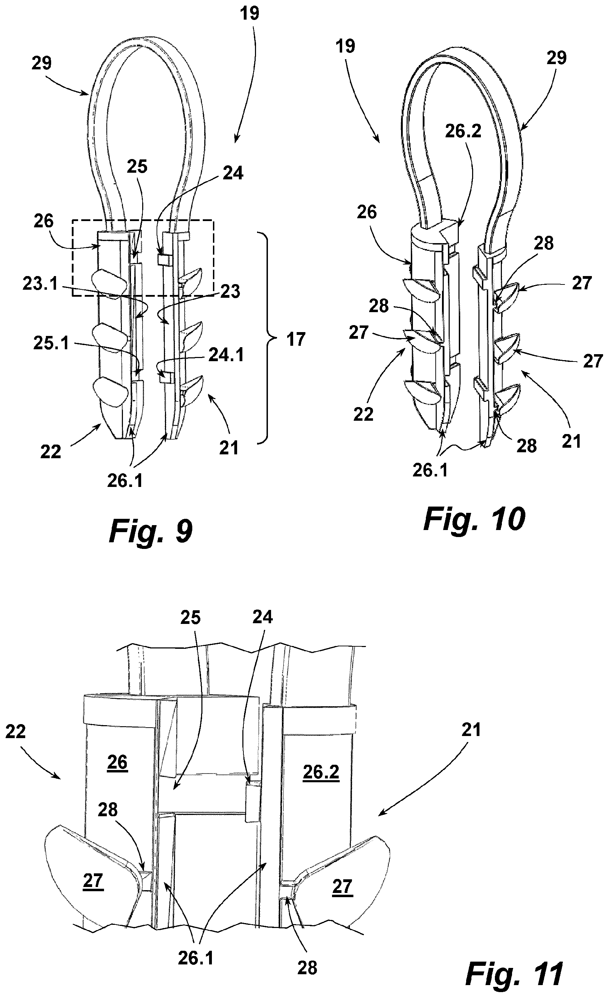

In den Figuren 9 bis 15 ist ein weiteres erfindungsgemäßes Befestigungselement 19 gezeigt. Dieses ist prinzipiell aufgebaut wie das Befestigungselement 1 der vorstehenden Figuren. Das Befestigungselement 19 unterscheidet sich von dem zuvor Beschriebenen dadurch, dass sein Schaft 20 in zwei Schaftteile 21, 22 geteilt ist. Durch die Schaftteile 21, 22 ist der Schaft 20 in Querrichtung zu seiner Längserstreckung geteilt. Bei dem Befestigungselement 19 handelt es sich um eine steckdübelartige Dübelschelle. Die beiden Schaftteile 21, 22 tragen an ihren zueinander weisenden Rücken 23, 23.1 komplementäre Verriegelungsstrukturen, durch die, wenn miteinander in Eingriff gestellt, die beiden Schaftteile 21, 22 in Richtung der Längsachse des Schaftes 20 formschlüssig miteinander verbunden sind. Bei dem dargestellten Ausführungsbeispiel trägt das Schaftteil 21 positive Verriegelungsstrukturen, und zwar Verriegelungsleisten 24, 24.1. Diese sind mit Abstand in längsaxialer Richtung zueinander angeordnet. Das Schaftteil 22 trägt bezüglich ihrer Querschnittsgeometrie komplementär zu den Verriegelungsleisten 24, 24.1 ausgeführte Verriegelungsnuten 25, 25.1. Sowohl die Verriegelungsleisten 24, 24.1 als auch die Verriegelungsnuten 25, 25.1 sind in Richtung zu dem jeweiligen Rücken 23, 23.1 hinterschnitten. Die Verriegelungstrukturen können rastend unter Ausnutzung der Materialeigenschaften der Schaftteile 21, 22 miteinander in Eingriff gestellt werden.

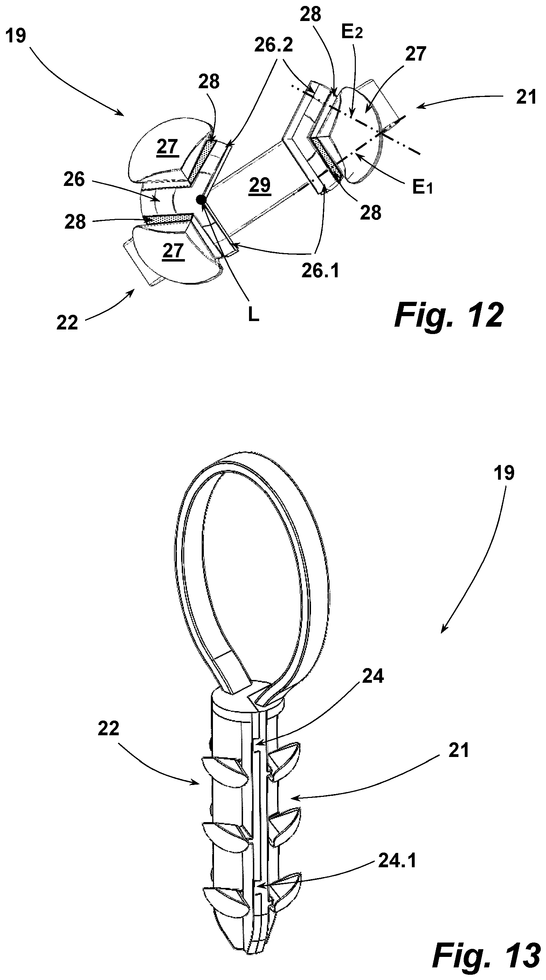

Der Schaft 20 des Befestigungselementes 19 verfügt wie auch das zuvor beschriebene Ausführungsbeispiel ebenfalls über drei mit gleichem Winkelabstand zueinander angeordnete Radialsegmente 26, 26.1, 26.2. Jeweils zwei Radialsegmente 26, 26.1; 26.1, 26.2; 26.2, 26 fassen die Sperrzähne 27 einer Sperrzahnreihe ein. Die Sperrzähne 27 sind jeweils unter Zwischenschaltung eines Filmscharniers 28 an ein benachbartes Radialsegment 26, 26.1, 26.2 angeformt. Von Besonderheit bei dem Befestigungselement 19 und der Anbindung der Sperrzähne 27 einer Sperrzahnreihe ist, dass die Sperrzähne 27 wechselweise an das eine benachbarte Radialsegment und an das andere benachbarte Radialsegment mittels des Filmscharniers 28 angeformt sind (siehe Figur 10). Dieses bewirkt eine besonders wirksame Verklammerung der Sperrzähne 27 an einer Bohrlochwandung, wenn an dem Befestigungselement 19 eine Auszugskraft anliegt. Die Filmscharniere 28 sind in der Darstellung der Figur 12 zum besseren Kenntlichmachen durch eine Rasterung hervorgehoben.

Aufgrund der vorstehend beschriebenen geometrischen Auslegung des Schaftes 20 verläuft die Trennfläche zwischen den beiden Schaftteilen 21, 22 mittig in Bezug auf die zueinander benachbarten Radialsegmente 26.1, 26.2 (siehe auch Figur 12). Die Trennfläche zwischen den beiden Schaftteilen 21, 22 ist daher gewinkelt ausgeführt. Die Trennfläche wird durch zwei winkelig zueinander angeordnete Trennebenen definiert, wobei der durch die Trennebenen eingeschlossene Winkel dem Winkel des Aneinandergrenzens zweier benachbarter Radialsegmente 26.1, 26.2 entspricht. Hierdurch erfahren die miteinander in Eingriff gestellten Schaftteile 21, 22 eine zusätzliche Stabilität gegenüber einer Verstellung gegeneinander in Querrichtung zur Längsachse des Schaftes 20 bei Belastungen oder auch beim Einstecken des Schaftes 20 in ein entsprechend vorbereitetes Bohrloch in einen Befestigungsgrund.

Die Sperrzähne 27 sind, wie vorstehend erläutert, in derselben Art und Weise wechselweise an die jeweils benachbarten Radialsegmente angeschlossen, wie dieses zu dem vorstehenden Ausführungsbeispiel beschrieben ist. Daher gelten die diesbezüglichen Ausführungen in gleicher Weise für das Befestigungselement 19.

Figur 13 zeigt das Befestigungselement 19 mit seinen bezüglich ihrer Verriegelungsstrukturen 24, 25; 24.1, 25.1 miteinander in Eingriff gestellten Schaftteile 21, 22. Das Schlaufenelement 29 ist in diesem Zustand des Befestigungselementes 19 nach Art einer Schelle zuvor um ein zu montierendes Langgut, beispielsweise ein Kabel oder ein Rohr, gelegt worden.

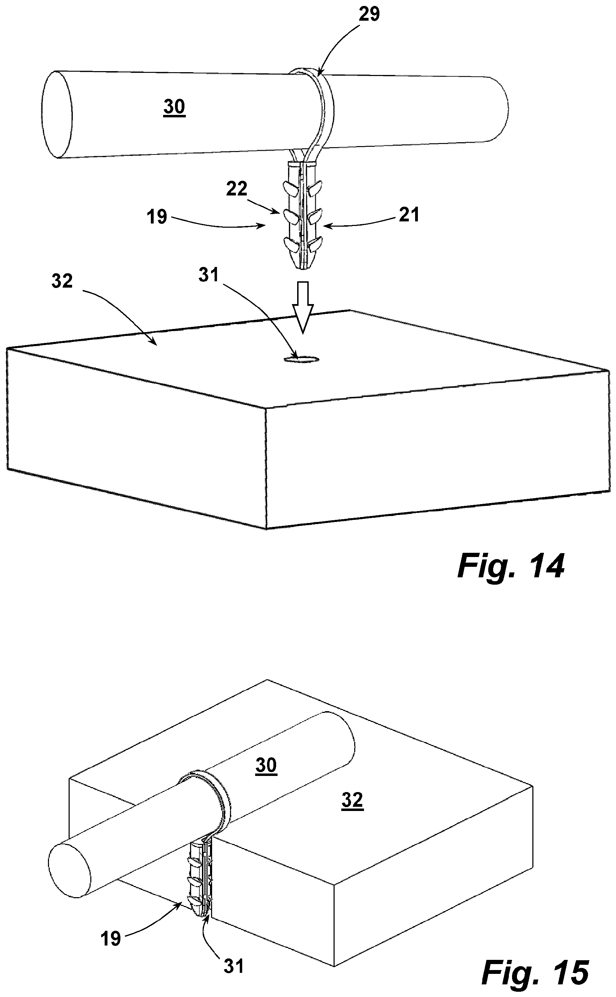

Figur 14 zeigt das Befestigungselement 19 mit seinen beiden zum Ausbilden des Schaftes 20 verbundenen Schaftteilen 21, 22 mit einem durch das Schlaufenelement 29 gehaltenen Kabel 30, vorbereitet, um in einem Bohrloch 31 eines Befestigungsgrundes 32, beispielsweise einer Wand, einer Decke oder dergleichen verankert zu werden. Mit dem Befestigungselement 19 wird das Kabel 30 an dem Befestigungsgrund 32 befestigt. Die auszuführende translatorische Montagebewegung ist in Figur 14 mit einem Blockpfeil kenntlich gemacht.

Figur 15 zeigt das an dem Befestigungsgrund 32 mittels des Befestigungselementes 19 montierte Kabel 30. Der Schaft 20 des Befestigungselementes 19 ist in das Bohrloch 31 eingedrückt und mittels seiner Sperrzähne 27 auszugsgesichert darin festgelegt.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

**Bezugszeichenliste**

| | | | |
|---|---|---|---|
| 1 | Befestigungselement | 31 | Bohrloch |
| 2 | Schaft | 32 | Befestigungselement |
| 3, 3.1 | Sperrzahn | | |
| 4 | Schaftspitze | B | Biegeachse |
| 5 | Kopf | E₁, E₁-E₂, E₂ | Ebene |
| 6, 6.1, 6.2 | Radialsegment | L | Längsachse |
| 7 | Kammer | M, M.1 | Mantelfläche |
| 8 | Kante | S | Spur des Kontaktabschnittes |
| 9 | Flächenabschnitt | T | Tangente |
| 10 | Flächenabschnitt | | |
| 11 | Kante | | |
| 12 | Zahn | | |
| 13 | Filmscharnier | | |
| 14 | Filmscharnier | | |
| 15, 15.1 | Scheitel | | |
| 16 | Bohrung | | |
| 17 | Befestigungsgrund | | |
| 18 | Bohrlochwand | | |
| 19 | Befestigungselement | | |
| 20 | Schaft | | |
| 21 | Schaftteil | | |
| 22 | Schaftteil | | |
| 23, 23.1 | Rücken | | |
| 24, 24.1 | Verriegelungsleiste | | |
| 25, 25.1 | Verriegelungsnut | | |
| 26, 26.1, 26.2 | Radialsegment | | |
| 27 | Sperrzahn | | |
| 28 | Filmscharnier | | |
| 29 | Schlaufenelement | | |
| 30 | Kabel | | |

## Patentansprüche

1. Befestigungselement mit einem Schaft (2, 20) und mit in seitlicher Richtung von diesem abragenden, an den Schaft (2, 20) unter Zwischenschaltung eines Scharniers (13, 14; 28) angeformten und gegenüber diesem kippbaren Sperrzähnen (3, 3.1; 27) zum kraftschlüssigen Verbinden des mit seinem Schaft (2, 20) in ein Bohrloch (16, 31) eingesetzten Befestigungselementes (1, 19) bei einer entgegen der Einsetzrichtung auf das Befestigungselement (1, 19) wirkenden Zugbelastung, welche Sperrzähne (3, 3.1; 27) mit einer gewölbten Unterseite ausgestattet sind, **dadurch gekennzeichnet, dass** die Kippbarkeit zumindest einiger der Sperrzähne (3, 3.1; 27) gegenüber dem Schaft (2, 20) dergestalt eingerichtet ist, dass der den maximalen Radius des Schaftes (2, 20) des Befestigungselementes (1, 19) bestimmende Abschnitt dieser Sperrzähne (3, 3.1; 27) im Auslieferungszustand des Befestigungselementes (1, 19) in einer von der Längsachse (L) des Schaftes (2, 20) beabstandeten oder winklig zu dieser verlaufenden Ebene (E₁, E₂) verstellbar ist.

2. Befestigungselement nach Anspruch 1, **dadurch gekennzeichnet, dass** die Kipprichtung der in einer Ebene (E₁, E₂) parallel oder winklig zur Längsachse (L) des Schaftes (2, 20) verstellbaren Sperrzähne (3, 3.1; 27) einer Sperrzahnreihe dergestalt eingerichtet ist, dass ein Teil der Sperrzähne (3; 27) in der einen Ebene (E₁) und der andere Teil der Sperrzähne (3.1, 27) in einer anderen Ebene (E₂) kippbar sind, welche beiden Ebenen (E₁, E₂) sich schneiden und dadurch ein Teil der Sperrzähne (3, 27) in eine erste Richtung und ein anderer Teil der Sperrzähne (3.1, 27) in Bezug auf die Ausrichtung der Längsachse des Schaftes (2, 20) in eine andere, sich von der ersten Richtung unterscheidende zweite Richtung kippbar sind.

3. Befestigungselement nach Anspruch 2, **dadurch gekennzeichnet, dass** die Hälfte der Sperrzähne (3, 27) einer Sperrzahnreihe in der ersten Ebene (E₁) in die eine Richtung und die andere Hälfte der Sperrzähne (3.1, 27) in der zweiten Ebene (E₂) die andere Richtung kippbar sind.

4. Befestigungselement nach einem der Ansprüche 1 bis 3, **dadurch gekennzeichnet, dass** die Biegeachsen (B) der verstellbaren Sperrzähne (3, 3.1; 27) und die im Kontaktbereich dieser Sperrzähne (3, 3.1; 27) mit einer Bohrlochwandung befindlichen Tangenten (T) winklig zueinander verlaufen.

5. Befestigungselement nach einem der Ansprüche 1 bis 4, **dadurch gekennzeichnet, dass** die Biegeachsen (B) der verstellbaren Sperrzähne (3, 3.1; 27) rechtwinklig gegenüber der Längserstreckung des Schaftes (2, 20) ausgerichtet sind.

6. Befestigungselement nach einem der Ansprüche 1 bis 5, **dadurch gekennzeichnet, dass** zumindest einige der Sperrzähne (3, 3.1; 27) des Befestigungselementes (1, 19) winklig zur Längsachse des Schaftes (2. 20) verstellbar sind.

7. Befestigungselement mit einem Schaft (2, 20) und mit in seitlicher Richtung von diesem abragenden, an den Schaft (2, 20) unter Zwischenschaltung eines Scharniers (13, 14; 28) angeformten und gegenüber diesem kippbaren Sperrzähnen (3, 3.1; 27) zum kraftschlüssigen Verbinden des in ein Bohrloch (16; 31) eingesetzten Befestigungselementes (1, 19) bei einer entgegen der Einsetzrichtung auf das Befestigungselement (1, 19) wirkenden Zugbelastung, welche Sperrzähne (3, 3.1; 27) mit einer gewölbten Unterseite ausgestattet sind, wobei der Schaft (2, 20) in Umfangsrichtung zumindest drei der Längserstreckung des Schaftes (2, 20) folgende Sperrzahnreihen trägt, **dadurch gekennzeichnet, dass** der Schaft (2, 20) eine entsprechende Anzahl, mit gleichem Winkelabstand zueinander angeordnete Radialsegmente (6, 6.1, 6.2; 26, 26.1, 26.2) aufweist und jeweils eine Sperrzahnreihe durch zwei benachbart zueinander angeordnete Radialsegmente (6, 6.1, 6.2; 26, 26.1, 26.2) in Umfangsrichtung des Schaftes (2, 20) gesehen eingefasst ist.

8. Befestigungselement nach Anspruch 7, **dadurch gekennzeichnet, dass** die Sperrzähne (3, 3.1; 27) einer Sperrzahnreihe wechselweise an das eine und das andere diese Sperrzahnreihe einfassende Radialsegment (6, 6.1, 6.2; 26, 26.1, 26.2) angeformt sind.

9. Befestigungselement nach Anspruch 7 oder 8, **dadurch gekennzeichnet, dass** zumindest einige der Sperrzähne (3, 3.1; 27) nach einem oder mehreren der Ansprüche 1 bis 6 ausgeführt sind.

10. Befestigungselement nach Ansprüche 1 bis 9, **dadurch gekennzeichnet, dass** die im Auslieferungszustand des Befestigungselementes (1) von dem ein-steckseitigen Ende des Schaftes (2) wegweisende Oberseite der Sperrzähne (3, 3.1) durch zwei winklig zueinander angeordnete Flächenabschnitte (9, 10) gebildet ist, durch welche winklige Flächenanordnung an der außenliegenden Umfangskante (8) der Sperrzähne (3, 3.1) ein Zahn (12) gebildet ist.

11. Befestigungselement nach einem der Ansprüche 1 bis 10, **dadurch gekennzeichnet, dass** der Schaft (20) in Querrichtung zu seiner Längserstreckung in zumindest zwei Schaftteile (21, 22) unterteilt ist, welche Schaftteile (21, 22) durch ein flexibles Schlaufenelement (29) miteinander verbunden und, wenn in ein Bohrloch (31) eingesetzt, mit ihren Rücken (23, 23.1) aneinander abgestützt sind.

12. Befestigungselement nach Anspruch 11, **dadurch gekennzeichnet dass** die Rücken (23, 23.1) der aneinander abgestützten Schaftteile (21, 22) in Richtung der Längserstreckung des Schaftes (20) wirkende Verriegelungsstrukturen (24, 25; 24.1, 25.1) aufweisen, durch die die Schaftteile (21, 22), wenn mit ihren Rücken (23, 23.1) aneinander abgestützt, in Richtung der Längsachse (L) des Schaftes (20) formschlüssig miteinander verriegelt sind.

13. Befestigungselement nach Anspruch 12, **dadurch gekennzeichnet, dass** ein erstes Schaftteil (21) wenigstens eine positive Verriegelungsstruktur (24, 24.1) und ein zweites Schaftteil (22) eine dazu komplementäre negative Verriegelungsstruktur (25, 25.1) aufweist.

14. Befestigungselement nach Anspruch 13, **dadurch gekennzeichnet, dass** die komplementären Verriegelungsstrukturen (24, 25; 24.1, 25.1) der beiden Schaftteile (21, 22) jeweils eine in einer Querrichtung zur Längsachse (L) des Schaftes (20) wirkende Hinterschneidung aufweisen, durch die, wenn miteinander rastend in Eingriff gestellt, die beiden Schaftteile (21, 22) in einer Querrichtung zur Längsachse (L) des Schaftes (20) formschlüssig miteinander verbunden sind.

15. Befestigungselement nach Anspruch 14, **dadurch gekennzeichnet, dass** der Schaft (20) über drei Radialsegmente (26, 26.1, 26.2) verfügt und die Trennfläche der beiden Schaftteile (21, 22) durch zwei benachbart zueinander angeordnete Radialsegmente (26.1, 26.2), insbesondere mittig innerhalb dieser Radialsegmente (26.1, 26.2) verläuft.

## Claims

1. A fastening element with a shaft (2, 20) and with locking teeth (3, 3.1; 27) projecting laterally therefrom, integrally formed on the shaft (2, 20) with the interposition of a hinge (13, 14; 28) and tiltable relative to the shaft, for the force-fitting connection of the fastening element (1, 19) inserted with its shaft (2, 20) into a borehole (16, 31) in the event of a tensile load acting on the fastening element (1, 19) opposite to the direction of insertion, which locking teeth (3, 3.1; 27) are provided with a curved underside, **characterized in**that the tiltability of at least some of the locking teeth (3, 3.1; 27) relative to the shaft (2, 20) is arranged in such a way that the section of these locking teeth determining the maximum radius of the shaft (2, 20) of the fastening element (1, 19) (3, 3.1; 27) in the delivery state of the fastening element (1, 19) is adjustable in a plane (E₁, E₂) which is spaced from the longitudinal axis (L) of the shaft (2, 20) or which runs at an angle thereto.

2. The fastening element according to claim 1, **characterized in that** the tilting direction of the locking teeth (3, 3.1; 27) of a row of locking teeth, which are adjustable in a plane (E₁, E₂) parallel or at an angle to the longitudinal axis (L) of the shaft (2, 20), is set up in such a way that some of the locking teeth (3; 27) can be tilted in one plane (E₁) and the other part of the locking teeth (3.1, 27) can be tilted in another plane (E₂), which two planes (E₁, E₂) intersect and as a result some of the locking teeth (3, 27) can be tilted in a first direction and another part of the locking teeth (3.1, 27) can be tilted in a second direction different from the first direction with respect to the orientation of the longitudinal axis of the shaft (2, 20).

3. Fastening element according to claim 2, **characterized in that** half of the locking teeth (3, 27) of a row of locking teeth in the first plane (E₁) can be tilted in one direction and the other half of the locking teeth (3.1, 27) in the second plane (E₂) can be tilted in the other direction.

4. The fastening element according to any one of claims 1 to 3, **characterized in that** the bending axes (B) of the adjustable locking teeth (3, 3.1; 27) and the tangents (T) located in the contact region of these locking teeth (3, 3.1; 27) with a borehole wall run at an angle to one another.

5. The fastening element according to any one of claims 1 to 4, **characterized in that** the bending axes (B) of the adjustable locking teeth (3, 3.1; 27) are aligned at right angles to the longitudinal extent of the shaft (2, 20).

6. The fastening element according to any one of claims 1 to 5, **characterized in that** at least some of the locking teeth (3, 3.1; 27) of the fastening element (1, 19) are adjustable at an angle to the longitudinal axis of the shaft (2, 20).

7. A fastening element with a shaft (2, 20) and with locking teeth (3, 3.1; 27) projecting laterally therefrom, formed on the shaft (2, 20) with the interposition of a hinge (13, 14; 28) and tiltable relative to the latter, for force-fittingly connecting the fastening element (1, 19) inserted into a borehole (16; 31) when a tensile load acts on the fastening element (1, 19) opposite to the direction of insertion, which locking teeth (3, 3.1; 27) are provided with a curved underside, wherein the shaft (2, 20) carries at least three rows of locking teeth following the longitudinal extent of the shaft (2, 20) in the circumferential direction, **characterized in that** the shaft (2, 20) has a corresponding number of radial segments (6, 6.1, 6.2; 26, 26.1, 26.2) arranged at the same angular distance from one another and each row of locking teeth is enclosed by two radial segments (6, 6.1, 6.2; 26, 26.1, 26.2) arranged adjacent to one another, as seen in the circumferential direction of the shaft (2, 20).

8. The fastening element according to claim 7, **characterized in that** the locking teeth (3, 3.1; 27) of a row of locking teeth are alternately formed on one and the other radial segment (6, 6.1, 6.2; 26, 26.1, 26.2) enclosing this row of locking teeth.

9. The fastening element according to claim 7 or 8, **characterized in that** at least some of the locking teeth (3, 3.1; 27) are designed according to one or more of claims 1 to 6.

10. The fastening element according to claims 1 to 9, **characterized in that** the upper side of the locking teeth (3, 3.1) pointing away from the insertion-side end of the shaft (2) in the delivery state of the fastening element (1) is formed by two surface sections (9, 10) arranged at an angle to one another, by which angular surface arrangement a tooth (12) is formed on the outer peripheral edge (8) of the locking teeth (3, 3.1).

11. The fastening element according to any one of claims 1 to 10, **characterized in that** the shaft (20) is divided in the transverse direction to its longitudinal extent into at least two shaft parts (21, 22), which shaft parts (21, 22) are connected to one another by a flexible loop element (29) and, when inserted into a borehole (31), are supported on one another with their backs (23, 23.1).

12. The fastening element according to claim 11, **characterized in that** the backs (23, 23.1) of the mutually supported shaft parts (21, 22) have locking structures (24, 25; 24.1, 25.1) acting in the direction of the longitudinal extent of the shaft (20), by means of which the shaft parts (21, 22), when supported against one another with their backs (23, 23.1), are form-fittingly locked to one another in the direction of the longitudinal axis (L) of the shaft (20).

13. The fastening element according to claim 12, **characterized in that** a first shaft part (21) has at least one positive locking structure (24, 24.1) and a second shaft part (22) has a negative locking structure (25, 25.1) complementary thereto.

14. The fastening element according to claim 13, **characterized in that** the complementary locking structures (24, 25; 24.1, 25.1) of the two shaft parts (21, 22) each have an undercut acting in a transverse direction to the longitudinal axis (L) of the shaft (20), by means of which, when engaged with one another in a locking manner, the two shaft parts (21, 22) are form-fittingly connected to one another in a transverse direction to the longitudinal axis (L) of the shaft (20).

15. The fastening element according to claim 14, **characterized in that** the shaft (20) has three radial segments (26, 26.1, 26.2) and the separating surface of the two shaft parts (21, 22) runs through two radial segments (26.1, 26.2) arranged adjacent to one another, in particular centrally within these radial segments (26.1, 26.2).

## Revendications

1. Élément de fixation avec un arbre (2, 20) et des dents de verrouillage (3, 3.1 ; 27) faisant saillie dans une direction latérale à partir de celui-ci, formé sur l'arbre (2, 20) avec interposition d'une charnière (13, 14 ; 28) et inclinable par rapport à ce dernier, pour la liaison par verrouillage de force de l'élément de fixation (1, 19) inséré avec son arbre (2, 20) dans un alésage (16, 31) en cas de contrainte de traction agissant sur l'élément de fixation (1, 19) dans le sens opposé à l'insertion, lesquelles dents de verrouillage (3, 3.1 ; 27) sont équipées d'une face inférieure incurvée, **caractérisé en ce que** l'inclinaison d'au moins certaines des dents de verrouillage (3, 3.1 ; 27) par rapport à l'arbre (2, 20) est agencée de sorte que la section de ces dents de verrouillage (3, 3.1 ; 27) déterminant le rayon maximal de l'arbre (2, 20) de l'élément de fixation (1, 19), à l'état de livraison de l'élément de fixation (1, 19), est réglable dans un plan (E₁, E₂) espacé de l'axe longitudinal (L) de l'arbre (2, 20) ou s'étendant à un angle par rapport à celui-ci.

2. Élément de fixation selon la revendication 1, **caractérisé en ce que** la direction d'inclinaison des dents de verrouillage (3, 3.1 ; 27) d'une rangée de dents de verrouillage, qui sont réglables dans un plan (E₁, E₂) parallèle ou incliné par rapport à l'axe longitudinal (L) de l'arbre (2, 20), est configurée de sorte qu'une partie des dents de verrouillage (3 ; 27) peut être inclinée dans un plan (E₁) et l'autre partie des dents de verrouillage (3.1, 27) peut être inclinée dans un autre plan (E₂), lesquels deux plans (E₁, E₂) se coupent, si bien qu'une partie des dents de verrouillage (3, 27) est inclinable dans une première direction et qu'une autre partie des dents de verrouillage (3.1, 27) est inclinable dans une seconde direction différente de la première direction par rapport à l'orientation de l'axe longitudinal de l'arbre (2, 20).

3. Élément de fixation selon la revendication 2, **caractérisé en ce que** la moitié des dents de verrouillage (3, 27) d'une rangée de dents de verrouillage dans le premier plan (E₁) est inclinable dans un sens et l'autre moitié des dents de verrouillage (3.1, 27) dans le second plan (E₂) est inclinable dans l'autre sens.

4. Élément de fixation selon l'une des revendications 1 à 3, **caractérisé en ce que** les axes de flexion (B) des dents de verrouillage réglables (3, 3.1 ; 27) et les tangentes (T) situées dans la zone de contact de ces dents de verrouillage (3, 3.1 ; 27) avec une paroi de forage s'étendent à un angle l'une par rapport à l'autre.

5. Élément de fixation selon l'une des revendications 1 à 4, **caractérisé en ce que** les axes de flexion (B) des dents de verrouillage réglables (3, 3.1 ; 27) sont alignés perpendiculairement à l'étendue longitudinale de l'arbre (2, 20).

6. Élément de fixation selon l'une des revendications 1 à 5, **caractérisé en ce qu'**au moins certaines des dents de verrouillage (3, 3.1 ; 27) de l'élément de fixation (1, 19) sont réglables en angle par rapport à l'axe longitudinal de l'arbre (2, 20).

7. Élément de fixation avec un arbre (2, 20) et des dents de verrouillage (3, 3.1 ; 27) faisant saillie dans une direction latérale à partir de celui-ci, formé sur l'arbre (2, 20) avec interposition d'une charnière (13, 14 ; 28) et inclinable par rapport à ce dernier, pour la liaison par verrouillage de force de l'élément de fixation (1, 19) inséré dans un alésage (16 ; 31) en cas de contrainte de traction agissant sur l'élément de fixation (1, 19) dans le sens opposé à l'insertion, lesquelles dents de verrouillage (3, 3.1 ; 27) sont équipées d'une face inférieure incurvée, dans lequel l'arbre (2, 20) porte au moins trois des rangées de dents de verrouillage dans la direction circonférentielle suivant l'étendue longitudinale de l'arbre (2, 20), **caractérisé en ce que** l'arbre (2, 20) présente un nombre correspondant de segments radiaux (6, 6.1, 6.2 ; 26, 26.1, 26.2) disposés à la même distance angulaire les uns des autres, et dans chaque cas, une rangée de dents de verrouillage est entourée par deux segments radiaux (6, 6.1, 6.2 ; 26, 26.1, 26.2) disposés de manière adjacente l'un à l'autre, vus dans la direction circonférentielle de l'arbre (2, 20).

8. Élément de fixation selon la revendication 7, **caractérisé en ce que** les dents de verrouillage (3, 3.1 ; 27) d'une rangée de dents de verrouillage sont formées en alternance sur l'un et l'autre segment radial (6, 6.1, 6.2 ; 26, 26.1, 26.2) entourant cette rangée de dents de verrouillage.

9. Élément de fixation selon la revendication 7 ou 8, **caractérisé en ce qu'**au moins certaines des dents de verrouillage (3, 3.1 ; 27) sont conçues selon l'une ou plusieurs des revendications 1 à 6.

10. Élément de fixation selon les revendications 1 à 9, **caractérisé en ce que** la face supérieure des dents de verrouillage (3, 3.1) pointant à l'opposé de l'extrémité d'insertion de la tige (2) à l'état de livraison de l'élément de fixation (1) est formée par deux sections de surface (9, 10) disposées en angle l'une par rapport à l'autre, disposition de surface angulaire par laquelle une dent (12) est formée sur le bord périphérique extérieur (8) des dents de verrouillage (3, 3.1).

11. Élément de fixation selon l'une des revendications 1 à 10, **caractérisé en ce que** la tige (20) est divisée dans la direction transversale à son étendue longitudinale en au moins deux parties de tige (21, 22), lesquelles parties de tige (21, 22) sont reliées l'une à l'autre par un élément de boucle flexible (29) et, lorsqu'elles sont insérées dans un trou de forage (31), s'appuient l'une sur l'autre par leurs dos (23, 23.1).

12. Élément de fixation selon la revendication 11, **caractérisé en ce que** les dos (23, 23.1) des parties d'arbre (21, 22) s'appuyant l'une sur l'autre présentent des structures de verrouillage (24, 25 ; 24.1, 25.1) agissant dans la direction de l'étendue longitudinale de l'arbre (20), au moyen desquelles les parties d'arbre (21, 22), lorsqu'elles s'appuient l'une sur l'autre avec leurs dos (23, 23.1), sont verrouillées positivement l'une à l'autre dans la direction de l'axe longitudinal (L) de l'arbre (20).

13. Élément de fixation selon la revendication 12, **caractérisé en ce qu'**une première partie d'arbre (21) présente au moins une structure de verrouillage positive (24, 24.1) et une seconde partie d'arbre (22) présente une structure de verrouillage négative (25, 25.1) complémentaire à celle-ci.

14. Élément de fixation selon la revendication 13, **caractérisé en ce que** les structures de verrouillage complémentaires (24, 25 ; 24.1, 25.1) des deux parties d'arbre (21, 22) présentent chacune une contre-dépouille agissant dans une direction transversale à l'axe longitudinal (L) de l'arbre (20), au moyen de laquelle, lorsqu'elles sont en prise l'une avec l'autre de manière verrouillée, les deux parties d'arbre (21, 22) sont reliées positivement l'une à l'autre dans une direction transversale à l'axe longitudinal (L) de l'arbre (20).

15. Élément de fixation selon la revendication 14, **caractérisé en ce que** l'arbre (20) dispose de trois segments radiaux (26, 26.1, 26.2) et la surface de séparation des deux parties d'arbre (21, 22) traverse deux segments radiaux (26.1, 26.2) disposés côte à côte, en particulier au centre de ces segments radiaux (26.1, 26.2).
